# FASCICULE DE BREVET EUROPEEN

(11) **EP 3 595 457 B1**
(45) Date de publication et mention de la délivrance du brevet: **11.08.2021**
(21) Numéro de dépôt: 18709648.2
(22) Date de dépôt: 15.03.2018
(51) Int. Cl.: A01J 25/00, A01J 25/15, A01J 27/00, A23C 19/09, A23P 30/20

(54) **PROCÉDÉ DE PRODUCTION D'UNE SPIRALE FROMAGÈRE ET DISPOSITIF D'ENROULEMENT POUR UNE TELLE PRODUCTION**
VERFAHREN ZUR HERSTELLUNG EINER KÄSESPIRALE UND ENTSPRECHENDE WICKELVORRICHTUNG
METHOD FOR PRODUCING A CHEESE SPIRAL AND ASSOCIATED WINDING DEVICE

(30) Priorité: 15.03.2017 FR 1752105
(43) Date de publication de la demande: 22.01.2020
(73) Titulaire: BEL, 92150 Suresnes (FR)
(72) Inventeur: QUESTE, Dominique, 77150 Lesigny (FR); GODOY, Juan, 92150 Suresnes (FR)
(74) Mandataire: Lavoix
(86) Numéro de dépôt international: PCT/EP2018/056582
(87) Numéro de publication internationale: WO 2018/167229

(56) Documents cités:
- EP-A1- 1 252 821
- WO-A1-2013/016154
- US-A- 4 299 855
- US-A- 5 792 497
- US-A1- 2008 199 569
- DATABASE GNPD [Online] MINTEL; avril 2017 (2017-04), Anonymous: "Mini Cheese Rolls", XP002771268, Database accession no. 4750389
- DATABASE GNPD [Online] MINTEL; 19 January 2012 (2012-01-19), anonymous: "Parenicky Cheese", XP055746528, retrieved from www.gnpd.com Database accession no. 1711851

## Description

La présente invention concerne un procédé de production d'une spirale fromagère, c'est-à-dire d'un fromage présentant une forme spiralée.

On connaît des spirales fromagères existant sous le nom de Pareničky. Ces spirales fromagères sont traditionnellement obtenues par l'aplatissement d'un pâton de fromage de manière à lui donner une forme de ruban allongé, ce ruban étant ensuite enroulé sur lui-même.

Un tel procédé est toutefois difficilement compatible avec les exigences de cadence nécessitées par une production industrielle à grande échelle. En outre, un tel procédé ne permet que l'obtention de spirales fromagères ayant une forme très spécifique, et en particulier ne permet pas la production de spirales fromagères ayant l'aspect d'un rouleau de réglisse. WO2013/016154 décrit l'extrusion de fromage.

Un objectif de l'invention est ainsi de permettre la production de spirales fromagères à des cadences compatibles avec les exigences industrielles à grande échelle. D'autres objectifs sont de permettre la production de spirales fromagères présentant l'aspect d'un rouleau de réglisse, lesdites spirales fromagères étant de préférence régulières, esthétiques et identiques entre elles, et de permettre une bonne tenue de la spirale fromagère après son enroulement en même temps qu'un déroulement facile de cette dernière au moment de sa consommation.

A cet effet, l'invention a pour objet un procédé de production d'une spirale fromagère présentant les étapes suivantes :
- fourniture d'une pâte fromagère,
- extrusion de la pâte fromagère, de manière à former un cordon fromager, et
- enroulement du cordon fromager sur lui-même, de manière à former la spirale fromagère.
- le procédé comprend une étape supplémentaire de traversée d'un presseur par le cordon fromager, au cours de laquelle le cordon fromager, qui est allongé suivant une direction longitudinale, est entraîné suivant cette direction longitudinale et écrasé suivant une direction transversale sensiblement perpendiculaire à la direction longitudinale, l'enroulement comprenant les sous-étapes suivantes :
   ∘ saisie d'une extrémité initiale du cordon fromager par un organe de saisie en sortie du presseur, puis
   ∘ rotation de l'organe de saisie autour d'un axe de rotation sensiblement perpendiculaire aux directions longitudinale et transversale.

Selon des modes de réalisation particuliers de l'invention, le procédé de production présente également l'une ou plusieurs des caractéristiques suivantes, considérée(s) isolément ou suivant toute(s) combinaison(s) techniquement possible(s):
- l'étape de rotation comprend le déplacement simultané de l'organe de saisie, conjointement avec l'axe de rotation, à l'écart du presseur ;
- le déplacement de l'organe de saisie conjointement avec l'axe de rotation est effectué selon une direction de déplacement comprise dans un plan défini par les directions transversale et longitudinale, ladite direction de déplacement étant en particulier constituée par la direction longitudinale ;
- l'organe de saisie est centré sur l'axe de rotation ;
- l'axe de rotation est sensiblement vertical ;
- l'étape d'enroulement comprend la détection de la sortie de l'extrémité initiale du cordon hors du presseur, la rotation de l'organe de saisie étant enclenchée au terme d'une durée prédéterminée après ladite détection ;
- au cours de sa traversée du presseur, le cordon fromager emprunte un passage longitudinal défini par le presseur, ledit passage présentant un rétrécissement ayant une largeur transversale comprise entre 3 et 5 mm ;
- l'organe de saisie est formé de deux griffes qui, avant que ne débute la rotation de l'organe de saisie, sont sensiblement alignées transversalement l'une avec l'autre et sont espacées transversalement l'une de l'autre d'une largeur comprise entre 100% et 300% de la largeur transversale du rétrécissement ;
- le presseur comprend une première et une deuxième courroies fermées définissant entre elles le passage du cordon fromager, chacune desdites courroies fermées étant tendue entre deux poulies sensiblement parallèles à l'axe de rotation et espacées longitudinalement l'une de l'autre, chacune desdites courroies fermées comprenant un tronçon de guidage , disposé entre lesdites poulies, s'étendant sensiblement longitudinalement, le tronçon de guidage de chaque courroie fermée faisant face au tronçon de guidage de l'autre courroie fermée, le rétrécissement du passage étant constitué par la portion du passage s'étendant entre lesdits tronçons de guidage ;
- le presseur comprend, à l'entrée du passage, un dispositif de guidage entrant pour ajuster le positionnement du cordon fromager dans le passage selon une direction perpendiculaire au plan défini par les directions longitudinale et transversale ;
- le cordon fromager est reçu sur un support à sa sortie du presseur ;
- le presseur comprend, à sa sortie, un organe de guidage sortant pour plaquer le cordon fromager contre ledit support ;
- l'étape d'enroulement comprend une sous-étape supplémentaire de rétractation de l'organe de saisie à l'intérieur du support ;
- l'étape d'enroulement comprend une sous-étape supplémentaire de détection de la sortie d'une extrémité terminale du cordon fromager hors du presseur, la rétractation de l'organe de saisie à l'intérieur du support étant enclenchée au terme d'une durée prédéterminée après ladite détection ;
- le déplacement de l'organe de saisie et de l'axe de rotation consiste en une translation longitudinale ;
- le cordon fromager est maintenu tendu entre la sortie du presseur et l'organe de saisie pendant le déplacement de l'organe de saisie ;
- le cordon fromager comprend des fibres, une majorité desdites fibres étant orientées selon une direction d'élongation du cordon fromager ; et
- au cours de l'enroulement, le cordon fromager est à une température supérieure à 35°C.

L'invention a également pour objet un dispositif d'enroulement pour l'enroulement d'un cordon fromager en spirale, le dispositif d'enroulement comprenant :
- un bâti,
- un presseur apte à entraîner le cordon fromager relativement au bâti selon une direction longitudinale tout en comprimant le cordon fromager selon une direction transversale sensiblement perpendiculaire à la direction longitudinale, le presseur présentant une sortie, et
- un organe de saisie du cordon fromager en sortie du presseur, ledit organe de saisie étant monté rotatif relativement au bâti autour d'un axe de rotation sensiblement perpendiculaire aux directions transversale et longitudinale.

Selon des modes de réalisation particuliers de l'invention, le dispositif d'enroulement présente également l'une ou plusieurs des caractéristiques suivantes, considérée(s) isolément ou suivant toute(s) combinaison(s) techniquement possible(s) :
- l'organe de saisie est déplaçable conjointement avec l'axe de rotation relativement au bâti entre une position engagée, dans laquelle l'organe de saisie est proche de la sortie du presseur, et une position dégagée, dans laquelle l'organe de saisie est éloigné de la sortie du presseur,
- l'organe de saisie est déplaçable conjointement avec l'axe de rotation suivant une direction de déplacement comprise dans un plan défini par les directions transversale et longitudinale, ladite direction de déplacement étant en particulier constituée par la direction longitudinale, et
- l'axe de rotation est sensiblement vertical.

D'autres caractéristiques et avantages apparaîtront à la lecture de la description qui va suivre, faite en référence aux dessins annexés, dans lesquels :
- la Figure 1 est une vue schématique, de dessus, d'une installation de production propre à la mise en œuvre d'un procédé selon l'invention,
- la Figure 2 est une vue de dessus d'un poste d'enroulement de l'installation de production de la Figure 1, certaines parties du poste d'enroulement ayant été omises,
- la Figure 3 est une vue en perspective, de trois-quarts arrière, du poste d'enroulement de la Figure 2,
- la Figure 4 est une vue en perspective, de trois-quarts avant, du poste d'enroulement de la Figure 2,
- la Figure 5 est une vue schématique en coupe longitudinale, suivant un plan marqué V-V, du poste d'enroulement de la Figure 2, et
- la Figure 6 est un schéma en blocs illustrant les étapes d'un procédé mis en oeuvre par l'installation de production de la Figure 1.

Dans la suite, les termes d'orientation sont à entendre en référence au repère orthogonal usuel des chaines de production, représenté sur les Figures, ce repère comprenant :
- une direction longitudinale X, orientée de l'amont vers l'aval,
- une direction transversale Y, orientée de la droite vers la gauche et définissant avec la direction X un plan horizontal, et
- une direction verticale Z.

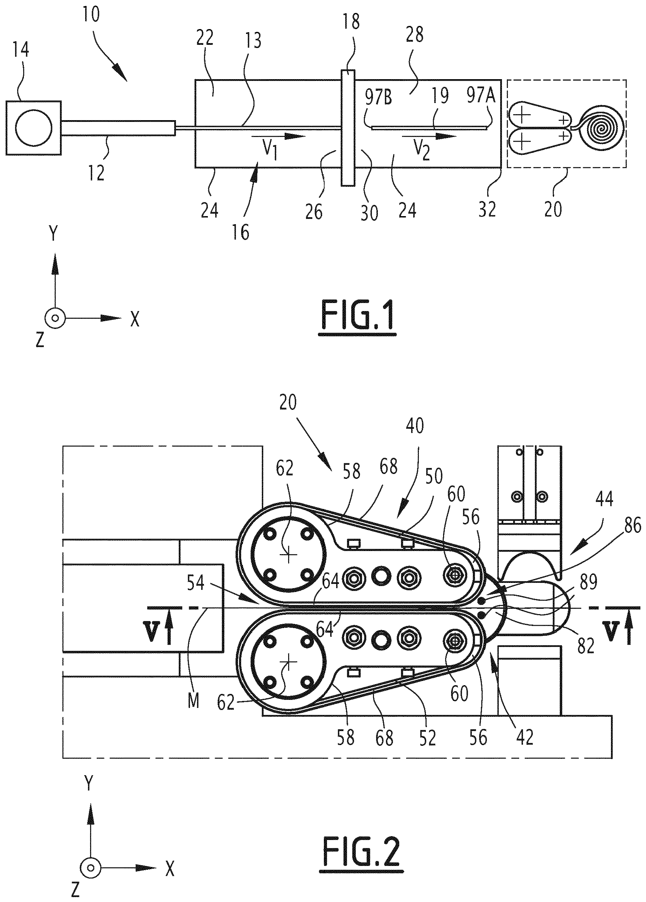

L'installation de production 10, représentée sur la Figure 1, comprend un bâti (non représenté), une extrudeuse 12, adaptée pour former un fil de fromage 13 à partir d'une pâte fromagère, un organe 14 d'alimentation de l'extrudeuse 12 en pâte fromagère, un poste 16 de transfert du fil de fromage 13 à sa sortie de l'extrudeuse 12, un poste 18 de découpe du fil de fromage 13 en cordons fromagers 19, et un poste 20 d'enroulement des cordons fromagers 19 en spirales fromagères.

Par « pâte fromagère », on comprend ici et dans la suite tout produit obtenu par voie de coagulation, fermenté ou non, affiné ou non, essentiellement obtenu à partir de matières d'origine laitière, pouvant inclure des matières premières d'origine végétale, par exemple de la matière grasse végétale, et de l'eau. Une pâte fromagère au sens de la présente demande peut cependant contenir en faibles quantités, agent coagulant, auxiliaire(s) de fabrication, arôme(s), colorant(s), conservateur(s), mais est préférentiellement dépourvue de texturant, sels de fonte et correcteurs d'acidité.

L'extrudeuse 12 comprend, de manière connue, un fourreau (non représenté), orienté suivant la direction longitudinale, une filière (non représentée), définissant au moins un orifice d'extrusion et fermant le fourreau à une de ses extrémités longitudinales, et un organe de poussée (non représenté) pour pousser la pâte fromagère contenue dans le fourreau en direction de la filière. L'extrudeuse 12 est adaptée pour conserver le caractère filant de la pâte fromagère avec laquelle elle est alimentée, lorsque la pâte fromagère est une pâte filante, tout en orientant une majorité des fibres de la pâte filante selon la direction longitudinale au cours de l'extrusion de ladite pâte filante à travers l'extrudeuse 12.

Le diamètre du ou de chaque orifice d'extrusion est de préférence inférieur à 10 mm et avantageusement compris entre 8,5 et 9,5 mm.

Par « pâte filante », on comprend ici et dans la suite une pâte fromagère présentant un aspect filant, c'est-à-dire telle que, lorsque la pâte est manipulée, elle s'étire de manière plastique en formant une toile filamenteuse multidirectionnelle.

Il est connu d'extruder une pâte filante à travers une extrudeuse en orientant la totalité des fibres de la pâte selon la direction du fourreau. A cet effet, il suffit de jouer sur des paramètres tels que la vitesse de poussée ou la température d'extrusion, ces paramètres étant fortement dépendants des caractéristiques de la pâte utilisée, par exemple du taux de matières grasses de cette dernière. De ce fait, les réglages de l'extrudeuse 12 permettant d'extruder la pâte filante en orientant la totalité des fibres de la pâte selon la direction du fourreau ne seront pas décrits ici.

L'organe d'alimentation 14 est adapté pour alimenter le fourreau de l'extrudeuse 12 avec la pâte fromagère qui lui est fourni.

Le poste de transfert 16 est adapté pour transférer le fil de fromage, depuis sa sortie de l'extrudeuse 12, jusqu'au poste d'enroulement 20. A cet effet, le poste de transfert 16 comprend, dans l'exemple représenté, un premier tapis d'entraînement 22 s'étendant d'une extrémité amont 24 à proximité de la sortie de l'extrudeuse 12 jusqu'à une extrémité aval 26 à proximité d'une entrée du poste de découpe 18, et un deuxième tapis d'entraînement 28 s'étendant d'une extrémité amont 30 à proximité d'une sortie du poste de découpe 18 jusqu'à une extrémité aval 32 à proximité d'une entrée du poste de d'enroulement 20.

De façon connue, chacun des tapis d'entraînement 22, 28 est constitué par un tapis roulant sans fin tendu par des cylindres (non représentés) orientés chacun transversalement et espacés longitudinalement l'un de l'autre, l'un de ces cylindres étant disposé à l'extrémité amont 24, 30 du tapis d'entraînement 22, 28 et l'autre cylindre étant disposé à l'extrémité aval 26, 32 du tapis d'entraînement 22, 28. Une partie du tapis d'entraînement 22, 28, disposée au-dessus des cylindres, définit une face supérieure du tapis 22, 28.

L'un de ces cylindres est entraîné par un moteur (non représenté), de façon à entraîner le tapis 22, 28 pour que chaque point de la surface supérieure se déplace de l'extrémité amont 24, 30 à l'extrémité aval 26, 32. On définit pour chacun des tapis d'entraînement, respectivement 22, 28, une vitesse, respectivement V₁, V₂, dudit tapis d'entraînement 22, 28 comme étant la vitesse de chacun de ces points par rapport au bâti. La vitesse V₁, V₂ de chaque tapis 22, 28 est ainsi orientée sensiblement longitudinalement, de l'amont vers l'aval.

La vitesse V₂ est de préférence supérieure à la vitesse V₁. En particulier, la vitesse V₂ est de préférence comprise entre 10 et 25 m/min, préférentiellement entre 15 et 20 m/min.

Le poste de découpe 18 est adapté pour effectuer une coupe transversale du fil de fromage 13. A cet effet, le poste de découpe 18 comprend typiquement une guillotine (non représentée) orientée transversalement.

En référence à la Figure 2, le poste d'enroulement 20 comprend un presseur 40 et un enrouleur 42. Dans l'exemple représenté, le poste d'enroulement 20 comprend en outre un organe 44 de dégagement de la spirale fromagère.

Le presseur 40 est adapté pour entraîner les cordons fromagers suivant la direction longitudinale X tout en les écrasant suivant la direction transversale Y. A cet effet, le presseur 40 comprend une première et une deuxième courroies fermées 50, 52 définissant entre elles un passage 54 pour les cordons fromagers 19 et disposées symétriquement l'une par rapport à l'autre relativement à un plan longitudinal médian M du presseur 40.

Chacune desdites courroies fermées 50, 52 est montée tendue entre deux poulies 56, 58 verticales, c'est-à-dire montées rotatives par rapport au bâti autour d'axes de rotation 60, 62 sensiblement verticaux. Ces poulies 56, 58 sont espacées longitudinalement l'une de l'autre et on distingue ainsi, pour chaque courroie fermée 50, 52, une poulie aval 56 et une poulie amont 58, le diamètre de la poulie aval 56 étant, dans l'exemple représenté, inférieur au diamètre de la poulie amont 58 et étant en particulier sensiblement égal à la moitié du diamètre de la poulie amont 58. Chacune desdites courroies fermées 50, 52 comprend un tronçon de guidage 64 disposé entre lesdites poulies 56, 58 et faisant face au tronçon de guidage 64 de l'autre courroie fermée 50, 52.

Les poulies aval 56 sont sensiblement de même diamètre et leurs axes de rotation 60 sont sensiblement alignés transversalement. De même, les poulies amont 58 sont sensiblement de même diamètre et leurs axes de rotation 62 sont sensiblement alignés transversalement.

Les poulies aval 56 et amont 58 d'une même courroie fermée 50, 52 présentent chacune une extrémité transversale qui est sensiblement alignée longitudinalement avec une extrémité transversale de l'autre poulie 56, 58. A cet effet, le rapport de la distance de l'axe de rotation 60 de la poulie aval 56 au plan longitudinal médian M sur la distance de l'axe de rotation 62 de la poulie amont 58 au plan longitudinal médian M est sensiblement égal au rapport du diamètre de la poulie amont 58 sur le diamètre de la poulie aval 56. Ainsi, les tronçons de guidage 64 des courroies fermées 50, 52 s'étendent tous deux sensiblement longitudinalement.

Les tronçons de guidage 64 définissent ainsi entre eux un rétrécissement 66 du passage 54, ce rétrécissement 66 étant constitué par la portion du passage 54 s'étendant entre lesdits tronçons de guidage 64. Ce rétrécissement 66 a une section sensiblement constante et présente une largeur transversale comprise entre 3 et 5 mm, en particulier comprise entre 3,5 et 4,5 mm. Cette largeur transversale est avantageusement supérieure à 30 %, de préférence supérieure à 40%, du diamètre de l'orifice défini par la filière de l'extrudeuse 12. Ladite largeur transversale reste néanmoins inférieure à 60%, de préférence inférieure à 50%, du diamètre de l'orifice défini par la filière de l'extrudeuse 12.

La longueur longitudinale du rétrécissement 66 est de préférence comprise entre 150 et 250 mm, de préférence entre 170 et 190 mm.

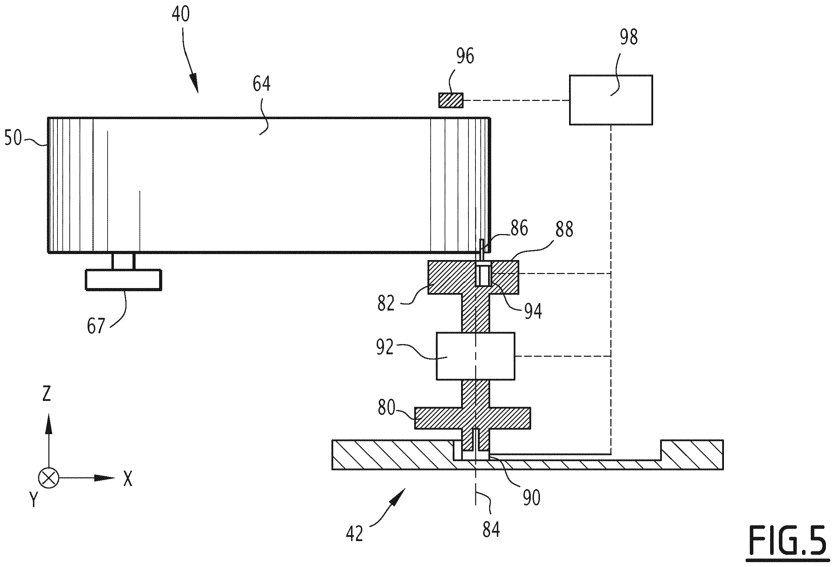

Pour chaque courroie fermée 50, 52, l'une des poulies 56, 58 entre lesquelles est montée la courroie 50, 52 est entraînée par un moteur 67 (Figure 5). Ladite courroie 50, 52 est ainsi entraînée de façon à ce que chaque point du tronçon de guidage 54 se déplace de la poulie amont 58 vers la poulie aval 56 à une vitesse sensiblement égale à celle du tronçon de guidage 54 de l'autre courroie 50, 52. La vitesse des courroies 50, 52 est en particulier sensiblement égale à la vitesse V₂ du tapis 28.

Chaque courroie fermée 50, 52 est de préférence réalisée en tissu. Elle présente une face extérieure 68, orientée à l'opposé des poulies 56, 58 entre lesquelles la courroie 50, 52 est montée. Cette face extérieure 68 est avantageusement recouverte d'un matériau compatible avec le contact alimentaire, par exemple le polyuréthane.

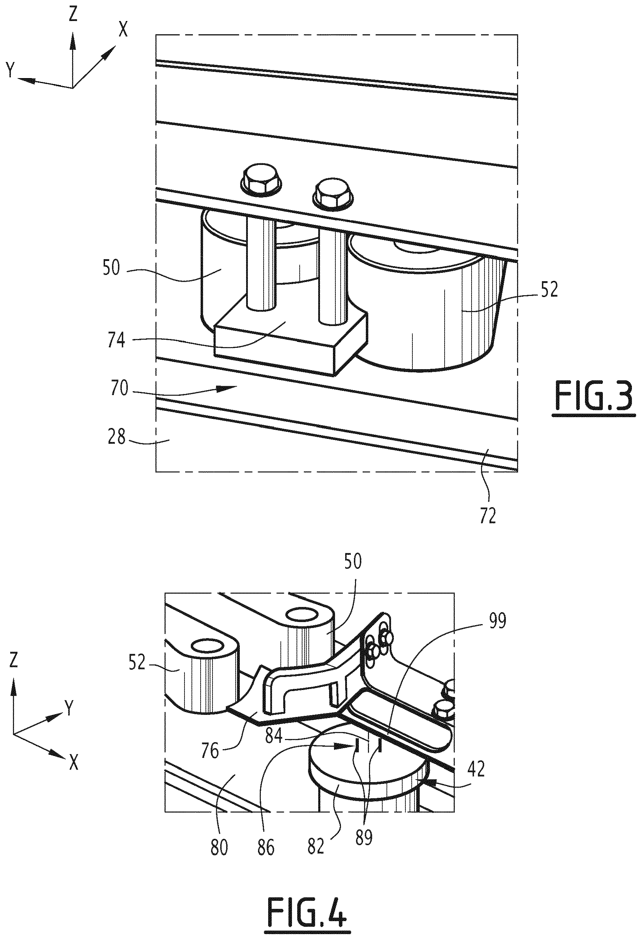

En référence à la Figure 3, le presseur 40 comprend également, à l'entrée du passage 54, un dispositif de guidage entrant 70 pour corriger le placement vertical des cordons fromagers 19 dans le passage 54. Ce dispositif de guidage 70 comprend un cylindre transversal inférieur 72 et une plaque de guidage supérieure 74.

La distance verticale entre le cylindre 72 et la plaque 74 est avantageusement comprise entre 100 et 150 %, de préférence entre 120 et 130 %, du diamètre de l'orifice défini par la filière de l'extrudeuse 12. Elle est en particulier réglable ; à cet effet, la position verticale de la plaque de guidage 74 par rapport est de préférence ajustable.

Le cylindre 72 est monté rotatif autour de son axe par rapport au bâti.

La plaque 74 définit une face inférieure (non représentée), faisant face à l'axe 72, sensiblement plane.

Le cylindre 72 est avantageusement en acier inoxydable. La plaque 74 est de préférence en Polyéthylène Haute Densité (PEHD) 500.

En référence à la Figure 4, le presseur 40 comprend encore, à la sortie du passage 54, un organe de guidage sortant 76 pour assurer un positionnement vertical correct des cordons fromagers par rapport à l'enrouleur 42. Cet organe de guidage sortant 76 est en particulier adapté pour plaquer les cordons fromagers contre l'enrouleur 42.

A cet effet, l'organe de guidage 76 est, dans l'exemple représenté, constitué par une plaque présentant une face inférieure (non représentée) sensiblement plane. Cette plaque est typiquement réalisée en acier inoxydable.

En référence à la Figure 5, l'enrouleur 42 comprend un coulisseau 80, monté mobile en translation par rapport au bâti suivant la direction longitudinale X, un mandrin 82 monté mobile en rotation par rapport au coulisseau 80 autour d'un axe de rotation 84, et un organe 86 de saisie des cordons fromagers à leur sortie du presseur 40.

Le coulisseau 80 est mobile en translation suivant la direction longitudinale X entre une position engagée, représentée sur les Figures 2 et 5, dans laquelle l'organe de saisie 86 est placé au niveau de la sortie du presseur 40, et une position dégagée, représentée sur la Figure 4, dans laquelle l'organe de saisie 86 est à distance de la sortie du presseur 40.

Le mandrin 82 définit une surface supérieure 88 de réception des cordons fromagers à leur sortie du presseur 40. Cette surface 88 est sensiblement plane et, ici, elle est en outre sensiblement horizontale.

La surface 88 est en particulier sensiblement centrée sur l'axe de rotation 84.

La surface 88 est typiquement constituée de PEHD 500.

L'axe de rotation 84 est sensiblement parallèle aux axes de rotation des poulies 60, 62. Dans l'exemple représenté, il est donc sensiblement vertical.

L'axe de rotation 84 est en outre fixe par rapport au mandrin 82 ; en d'autres termes, il est immobile dans tout repère attaché au mandrin 82, quel que soit le déplacement du mandrin 82 par rapport aux autres pièces de l'installation 10 permis par les liaisons des pièces de l'installation 10 entre elles. L'axe de rotation 84 est également fixe par rapport au coulisseau 80 et par rapport à l'organe de saisie 86.

L'organe de saisie 86 est centré sur l'axe de rotation 84. Il est donc également, dans l'exemple représenté, centré sur la surface de réception 88.

L'organe de saisie 86 est également sensiblement compris dans le plan longitudinal médian M du presseur 40, c'est-à-dire que la distance du centre (non représenté) de l'organe de saisie 86 au plan longitudinal médian M est inférieure à 1 cm, en particulier inférieure à 5 mm.

L'organe de saisie 86 est monté sur le mandrin 82 de manière à être mobile en rotation autour de l'axe de rotation 84 conjointement avec le mandrin 82. En d'autres termes, l'organe de saisie 86 est monté immobile en rotation autour de l'axe de rotation 84 par rapport au mandrin 82.

L'organe de saisie 86 est par ailleurs monté mobile en translation suivant la direction verticale Z par rapport au mandrin 82 entre une position rétractée à l'intérieur du mandrin 82 (non représentée), dans laquelle l'organe de saisie 86 est en-dessous de la surface de réception 88, et une position déployée hors du mandrin 82, visible sur les Figures 4 et 5, dans laquelle l'organe de saisie 86 fait saillie verticalement vers le haut depuis la surface de réception 88.

L'organe de saisie 86 est formé de deux griffes 89 (Figure 4) chacune constituée d'une tige, typiquement en acier inoxydable, sensiblement verticale. Lorsque le mandrin 82 est dans une configuration de départ, visible sur la Figure 2, ces deux griffes 89 sont sensiblement alignées transversalement l'une avec l'autre et sont espacées transversalement l'une de l'autre d'une largeur comprise entre 100% et 300% de la largeur transversale du rétrécissement 66.

Le centre de l'organe de saisie 86 est à équidistance des deux griffes 89.

L'enrouleur 42 comprend également un premier organe d'entraînement 90 pour entraîner la translation du coulisseau 80 par rapport au bâti, un deuxième organe d'entraînement 92 pour entraîner la rotation du mandrin 82 par rapport au coulisseau 80, un troisième organe d'entraînement 94 pour entraîner la translation de l'organe de saisie 86 par rapport au mandrin 82, un détecteur 96 pour détecter les passages d'extrémités initiales 97A et terminales 97B (Figure 1) des cordons fromagers 19 en sortie du presseur 40, et un module de commande 98 pour commander les organes d'entraînement 90, 92, 94 en fonction des passages détectés par le détecteur 96.

Le premier organe d'entraînement 90 est typiquement constitué par un servomoteur rotatif entrainant un système de coulisseau linéaire.

Le deuxième organe d'entraînement 92 est typiquement constitué par un moteur électrique rotatif.

Le troisième organe d'entraînement 94 est typiquement constitué par un vérin pneumatique.

Le détecteur 96 est typiquement constitué par un capteur laser.

Le module de commande 98 est typiquement réalisé sous la forme d'une unité de traitement d'information constituée d'une mémoire stockant des programmes et couplée à un processeur pour l'exécution desdits programmes. En variante, le module de commande 98 est réalisé au moins partiellement sous la forme de composants logiques programmables, ou encore sous forme de circuits intégrés dédiés, inclus dans l'enrouleur 42.

Le module de commande 98 est configuré pour commander le démarrage de la rotation du mandrin 82 et de la translation du coulisseau 80 vers sa position dégagée au terme d'une première durée prédéterminé après la détection, par le détecteur 96, du passage d'une extrémité initiale 97A d'un cordon fromager. Cette première durée prédéterminée est comprise entre 105 et 120% de la valeur, exprimée en secondes, obtenue par le calcul suivant : D / V_{P}, où D est la distance longitudinale, exprimée en mètres, entre le capteur 96 et l'organe de saisie 86 lorsque le coulisseau 80 est dans sa configuration engagée, et V_{P} est la vitesse, exprimée en mètres par secondes, des courroies 50, 52 du presseur 40.

Le module de commande 98 est également configuré pour commander la vitesse de rotation du mandrin 82 et la vitesse de déplacement du coulisseau 80 de manière à ce que chaque cordon fromager 19 demeure tendu entre l'organe de saisie 86 et le presseur 40 au fur et à mesure de l'enroulement du cordon fromager 19 en spirale.

Le module de commande 98 est encore configuré pour commander l'arrêt de la rotation du mandrin 82 et l'accélération de la translation du coulisseau 80 vers sa position dégagée au terme d'une deuxième durée prédéterminé après la détection, par le détecteur 96, du passage d'une extrémité terminale 97B d'un cordon fromager 19. Cette deuxième durée prédéterminée est typiquement sensiblement égale à la première durée prédéterminée.

Le module de commande 98 est par ailleurs configuré pour commander la rétraction de l'organe de saisie 86 dans le mandrin 82 lorsque le coulisseau 80 a atteint sa position dégagée, au terme d'une troisième durée prédéterminée après la détection, par le détecteur 96, du passage d'une extrémité terminale 97B d'un cordon fromager 19.

Le module de commande 98 est enfin configuré pour commander le retour du coulisseau 80 dans sa position engagée, du mandrin 82 dans sa configuration de départ et de l'organe de saisie 86 dans sa position déployée au terme d'une troisième durée prédéterminée après que le coulisseau 80 a atteint sa position dégagée.

L'enrouleur 42 comprend pour finir un guide latéral 99 (Figure 4) pour rabattre les extrémités terminales 97B des cordons fromagers 19 contre la spirale fromagère formée. Ce guide latéral 99 est, comme représenté, typiquement formé par une barre allongée longitudinalement et définissant une face plane, faisant face au mandrin 82, disposée à une distance prédéterminée de l'organe de saisie 86, cette distance prédéterminée étant typiquement comprise entre 20 et 30 mm, en particulier entre 21 et 25 mm.

Dans l'exemple représenté, l'organe de dégagement 44 est formé par un poussoir adapté pour pousser la spirale fromagère hors du mandrin 82 lorsque le coulisseau 80 est dans sa position dégagée. Selon une variante non représentée, l'organe de dégagement 44 est formé par un préhenseur.

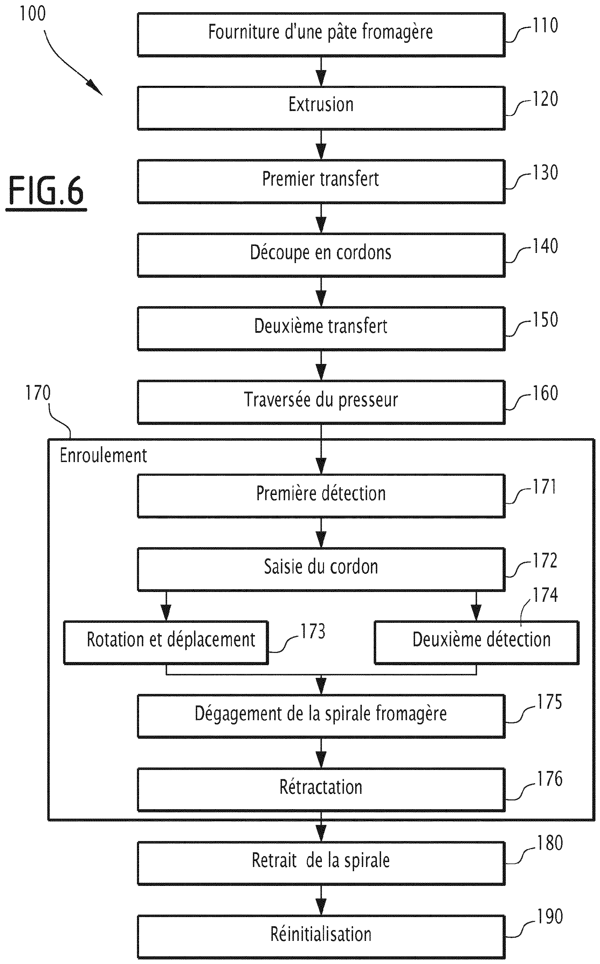

Un procédé 100 de production d'une spirale fromagère mis en oeuvre par l'installation 10 va maintenant être décrit, en référence à la Figure 6.

Tout d'abord, l'extrudeuse 12 est alimentée en pâte fromagère au cours d'une étape initiale 110 de fourniture de la pâte fromagère.

Cette pâte fromagère est en particulier constituée par une pâte filante.

Avantageusement, cette pâte fromagère a été obtenue par coagulation enzymatique.

Selon un mode de réalisation particulier, la pâte fromagère est un produit fromager de type pâte pressée. Dans le cadre de la présente invention, on entend par produit fromager de type pâte pressée un produit fromager dont la TEFD est comprise entre 54 % et 69 %, ce qui correspond à un produit fromager à pâte demi-dure selon la norme Codex STAN 283-1978.

La norme Codex STAN 283-1978 propose en effet une classification des produits fromagers suivant leur teneur en eau du produit fromager dégraissé (TEFD). Les produits fromagers ayant une TEFD comprise entre 54 % et 69 % peuvent être appelés produits fromagers à pâte demi-dure, et les produits fromagers dont la TEFD est supérieure à 67 % peuvent être appelés produits fromagers à pâte molle.

L'expression « comprise » est à entendre au sens large. Ainsi, une grandeur A est comprise entre une première valeur A1 et une deuxième valeur A2 lorsque, d'une part, la grandeur A est supérieure ou égale à la première valeur A1 et, d'autre part, la grandeur A est inférieure ou égale à la deuxième valeur A2.

Typiquement, la TEFD se calcule comme suit : (Poids de l'eau dans le fromage) x 100 / (Poids total du fromage - Poids de la matière grasse dans le fromage).

De préférence, la pâte fromagère utilisée dans le procédé 100 a un extrait sec compris entre 47 et 55 % en poids par rapport au poids total de la pâte fromagère.

Ensuite, la pâte fromagère est extrudée par l'extrudeuse 12 au cours d'une étape d'extrusion 120. A la sortie de l'extrudeuse 12, on obtient ainsi un fil de fromage 13 continu allongé suivant la direction longitudinale X et dont les fibres sont orientées en grande majorité, c'est-à-dire à plus de 70 %, et de préférence en totalité, c'est-à-dire à plus de 99%, suivant la direction d'élongation du fil 13. Cela est facilement observable à l'œil par séparation manuelle du fil 13 à chaud, à sa sortie de l'extrudeuse 12 : si, en pinçant deux bords opposés du fil 13 et en les écartant transversalement l'un de l'autre, le fil peut être fendu dans le sens sa longueur, c'est qu'alors les fibres du fil 13 sont orientées suivant ladite direction d'élongation..

Le fil de fromage 13 est ensuite conduit par le premier tapis d'entraînement 22, au cours d'une première étape de transfert 130, jusqu'au poste de découpe 18, où il est découpé successivement en cordons 19 d'une longueur comprise entre 300 et 400 mm, de préférence sensiblement égale à 350 mm, au cours d'une étape 140. On obtient alors des cordons fromagers 19, comme visible sur la Figure 1, chaque cordon 19 étant allongé suivant la direction longitudinale X et présentant suivant sa direction d'élongation une extrémité initiale 97A, constituée par l'extrémité du cordon 19 positionnée la plus en aval, et une extrémité terminale 97B, constituée par l'extrémité du cordon 19 positionnée la plus en amont.

Chaque cordon 19 est ensuite conduit par le deuxième tapis d'entraînement 24, au cours d'une deuxième étape de transfert 150, jusqu'au poste d'enroulement 20, où il traverse le presseur 40 au cours d'une étape de traversée 160, puis est enroulé sur lui-même, en spirale, au cours d'une étape d'enroulement 170, de manière à former la spirale fromagère.

Au cours de l'étape de traversée 160, le cordon fromager 19, qui arrive orienté suivant la direction longitudinale X, est tout d'abord guidé par le dispositif de guidage 70, qui ajuste la position verticale du cordon fromager par rapport aux courroies 50, 52. Le cordon fromager 19 est ensuite pris en charge par les courroies 50, 52, qui entraînent ce cordon fromager 19 suivant la direction longitudinale X. Ce faisant, le cordon fromager 19 avance dans le passage 54, jusqu'à arriver dans le rétrécissement 66. Là, le rétrécissement 66 étant plus étroit que le cordon fromager 19, le cordon fromager 19 est écrasé suivant la direction transversale Y. De ce fait, la section transversale du cordon fromager 19 prend une forme oblongue allongée suivant la direction verticale Z.

Le cordon fromager 19 est ainsi maintenu écrasé jusqu'à la sortie du passage 54, où il est reçu sur la surface de réception 88 du mandrin 82. Du fait de cet écrasement, la largeur transversale du cordon fromager 19 en sortie du presseur 40 est inférieure à 90% de la largeur transversale du cordon fromager 19 à l'entrée du presseur 40. Elle reste toutefois supérieure à 40%, de préférence supérieure à 50%, de la largeur transversale du cordon fromager 19 à l'entrée du presseur 40.

En particulier, la largeur transversale du cordon fromager 19 en sortie du presseur 40 est typiquement sensiblement égale à 4 mm.

C'est lorsque le cordon fromager 19 sort du presseur 40 que débute l'étape d'enroulement 170.

Lors du début de cette étape d'enroulement 170, la température du cordon fromager 19 est supérieure à 35°C et de préférence comprise entre 35 et 50°C. Du fait de la brièveté de l'étape d'enroulement 170, il gardera cette température pendant sensiblement toute la durée de l'étape d'enroulement 170. Il a en effet été observé de manière surprenante que l'utilisation de cette température pendant l'étape d'enroulement 170 permet d'assurer la cohésion des spires entre elles, sans pour autant que ces dernières ne fusionnent ni que des craquelures apparaissent en surface du cordon de fromage 19.

L'étape d'enroulement 170 comprend tout d'abord une première sous-étape 171 de détection, par le détecteur 96, de la sortie de l'extrémité initiale 97A du cordon fromager 19 hors du presseur 40. Cette détection est effective typiquement lorsque le détecteur 96 détecte que le faisceau laser qu'il émet est coupé.

Cette sous-étape 171 est suivie d'une sous-étape 172 de saisie de l'extrémité initiale 97A du cordon fromager 19 par l'organe de saisie 86 à sa sortie du presseur 40. Lors de cette sous-étape 172, le coulisseau 80 est dans sa position engagée, le mandrin 82 est dans sa configuration de départ, et l'organe de saisie 86 est déployé. Le cordon fromager 19 s'engage alors entre les griffes 89 de l'organe de saisie 86. Cela est obtenu facilement, du fait que le cordon fromager 19, à sa sortie du presseur 40, est compris dans le plan longitudinal médian M du presseur 40, plan dans lequel est également compris l'organe de saisie 86. En outre, la surface de réception 88 du mandrin 82 soutient le cordon fromager 19 par en-dessous et évite ainsi que le cordon fromager 19 ne dévie vers le bas par rapport à la position de l'organe de saisie 86, et l'organe de guidage sortant 76 plaque le cordon fromager 19 contre cette surface de réception 88, évitant ainsi que le cordon fromager 19 ne dévie vers le haut par rapport à la position de l'organe de saisie 86 ; on évite ainsi que la spirale fromagère ne prenne une forme de chapeau chinois. Enfin, l'espace transversal séparant les griffes 89 est suffisant pour permettre le passage de l'extrémité initiale 97A du cordon fromager 19 entre elles.

Du fait que, lors de cette sous-étape 172, l'organe de saisie 86 est positionné proche de la sortie du presseur 40, cela évite que le cordon fromager 19 ne dévie transversalement par rapport à la position de l'organe de saisie 86, et assure en outre que le cordon fromager 19 ait conservé sa section transversale oblongue au moment où il est saisi.

Ensuite s'amorce une sous-étape 173 au cours de laquelle le mandrin 82 et de l'organe de saisie 86 tournent autour de l'axe de rotation 84 par rapport au coulisseau 80, pendant que conjointement le coulisseau 80 est translaté suivant la direction longitudinale X à l'écart du presseur 40, entraînant avec lui l'axe de rotation 84, le mandrin 82 et l'organe de saisie 86. Cette sous-étape 173 est enclenchée au terme de la première durée prédéterminée après la première sous-étape de détection 171.

La rotation de l'organe de saisie 86 sur lui-même permet d'enrouler le cordon fromager 19 sur lui-même et, ainsi, de former la spirale fromagère.

Au cours de cette sous-étape 173, la vitesse de rotation du mandrin 82 et la vitesse de translation du coulisseau 80 sont régulées de manière à maintenir le cordon fromager 19 tendu entre la sortie du presseur 40 et l'organe de saisie 86, c'est-à-dire de manière à ce que le tronçon du cordon fromager 19 compris entre le presseur 40 et la partie du cordon 19 déjà enroulée s'étende de manière rectiligne. A cet effet, la vitesse de rotation du mandrin 82 et la vitesse de translation du coulisseau 80 sont indexées sur la vitesse V_{P} des courroies 50, 52 et sur l'augmentation de la circonférence de la spirale fromagère. Cela permet de plaquer le cordon fromager 19 contre la spirale fromagère est ainsi d'assurer un bon niveau d'adhérence entre les différentes spires.

Pendant le déroulé de la sous-étape 173, le détecteur 96 détecte, au cours d'une deuxième sous-étape de détection 174, la sortie de l'extrémité terminale 97B du cordon fromager 19 hors du presseur 40. Cette détection est effective typiquement lorsque le détecteur 96 détecte le rétablissement du faisceau laser qu'il émet.

Au terme de la deuxième durée prédéterminée après cette deuxième sous-étape de détection 174, la spirale fromagère est formée. La sous-étape 173 s'achève alors, et débute une sous-étape 175 de dégagement de la spirale fromagère ainsi formée.

Lors de cette sous-étape 175, la rotation du mandrin 82 et de l'organe de saisie 86 par rapport au coulisseau 80 est arrêtée. La translation du coulisseau 80 vers sa position de dégagement est quant à elle accélérée.

Puis, lorsque le coulisseau 80 a atteint sa position de dégagement, l'organe de saisie 86 est rétracté à l'intérieur du mandrin 82 lors d'une sous-étape de rétractation 176. Cette sous-étape 176 est enclenchée au terme de la troisième durée prédéterminée après la deuxième sous-étape de détection 174.

Une fois l'étape d'enroulement 170 achevée, la spirale fromagère est retirée du mandrin 82 par l'organe de dégagement 44 au cours d'une étape de retrait 180.

Puis, lors d'une étape 190 de réinitialisation de l'enrouleur 42, le coulisseau 80 est ramené en position engagée, le mandrin 82 est ramené dans sa position de départ, et l'organe de saisie 86 est redéployé. L'enrouleur 42 est alors prêt à enrouler un nouveau cordon fromager 19 sortant du presseur 40.

Grâce à l'invention décrite ci-dessus, il est ainsi possible de produire des spirales fromagères à forte cadence et à moindre coût.

En outre, les spirales fromagères ainsi produites peuvent présenter l'aspect d'un rouleau de réglisse, ce qui n'était pas possible avec les équipements antérieur. En effet, pour pouvoir être travaillés, les produits fromagers doivent être manipulés dans des plages de températures dans lesquelles ils ont tendance à s'effondrer sous l'effet de leur propre poids, ce qui empêche d'enrouler autour d'un axe vertical de fins cordons. Or, ici, en venant saisir les cordons de fromage 19 juste après leur sortie du presseur 40, on évite de leur laisser le temps de s'élargir sous l'effet de leur propre poids.

Enfin, les spirales fromagères ainsi obtenues peuvent être facilement déroulées au moment de leur consommation, notamment grâce à la faible adhérence existant entre les différentes spires, et grâce à l'orientation des fibres au sein de chaque spire.

## Revendications

1. Procédé (100) de production d'une spirale fromagère, **caractérisé en ce qu'**il comprend les étapes suivantes :
- fourniture (110) d'une pâte fromagère,
- extrusion (120) de la pâte fromagère, de manière à former un cordon fromager (19), et
- enroulement (170) du cordon fromager (19) sur lui-même, de manière à former la spirale fromagère,
le procédé comprenant une étape supplémentaire (160) de traversée d'un presseur (40) par le cordon fromager (19), au cours de laquelle le cordon fromager (19), qui est allongé suivant une direction longitudinale (X), est entraîné suivant cette direction longitudinale (X) et écrasé suivant une direction transversale (Y) sensiblement perpendiculaire à la direction longitudinale (X), l'enroulement (170) comprenant les sous-étapes suivantes :
- saisie (172) d'une extrémité initiale (97A) du cordon fromager (19) par un organe de saisie (86) en sortie du presseur (40), puis
- rotation (173) de l'organe de saisie (86) autour d'un axe de rotation (84) sensiblement perpendiculaire aux directions longitudinale (X) et transversale (Y).

2. Procédé de production (100) selon la revendication 1, dans lequel l'étape de rotation (173) comprend le déplacement simultané de l'organe de saisie (86), conjointement avec l'axe de rotation (84), à l'écart du presseur (40).

3. Procédé de production (100) selon la revendication 1, dans lequel le déplacement de l'organe de saisie (86) conjointement avec l'axe de rotation (84) est effectué selon une direction de déplacement comprise dans un plan défini par les directions transversale (Y) et longitudinale (X), ladite direction de déplacement étant en particulier constituée par la direction longitudinale (X), le déplacement de l'organe de saisie (86) et de l'axe de rotation (84) consistant de préférence en une translation longitudinale.

4. Procédé de production (100) selon l'une quelconque des revendications 1 à 3, dans lequel l'organe de saisie (86) est centré sur l'axe de rotation (84), l'axe de rotation (84) étant en particulier sensiblement vertical.

5. Procédé de production (100) selon l'une quelconque des revendications 1 à 4, dans lequel l'étape d'enroulement (170) comprend la détection (171) de la sortie de l'extrémité initiale (97A) du cordon (19) hors du presseur (40), la rotation (173) de l'organe de saisie (86) étant enclenchée au terme d'une durée prédéterminée après ladite détection (171), le cordon fromager (19) étant de préférence à une température supérieure à 35°C au cours de l'enroulement (170).

6. Procédé de production (100) selon l'une quelconque des revendications 1 à 5, dans lequel, au cours de sa traversée du presseur (40), le cordon fromager (19) emprunte un passage longitudinal (54) défini par le presseur (40), ledit passage (54) présentant un rétrécissement (66) ayant une largeur transversale comprise entre 3 et 5 mm.

7. Procédé de production (100) selon la revendication 6, dans lequel l'organe de saisie (86) est formé de deux griffes (89) qui, avant que ne débute la rotation de l'organe de saisie (86), sont sensiblement alignées transversalement l'une avec l'autre et sont espacées transversalement l'une de l'autre d'une largeur comprise entre 100% et 300% de la largeur transversale du rétrécissement (66).

8. Procédé de production (100) selon la revendication 6 ou 7, dans lequel le presseur (40) comprend une première et une deuxième courroies fermées (50, 52) définissant entre elles le passage (54) du cordon fromager (19), chacune desdites courroies fermées (50, 52) étant tendue entre deux poulies (60, 62) sensiblement parallèles à l'axe de rotation (84) et espacées longitudinalement l'une de l'autre, chacune desdites courroies fermées (50, 52) comprenant un tronçon de guidage (64), disposé entre lesdites poulies (60, 62), s'étendant sensiblement longitudinalement, le tronçon de guidage (64) de chaque courroie fermée (50, 52) faisant face au tronçon de guidage (64) de l'autre courroie fermée (50, 52), le rétrécissement (66) du passage (54) étant constitué par la portion du passage (54) s'étendant entre lesdits tronçons de guidage (64).

9. Procédé de production (100) selon l'une quelconque des revendications 6 à 8, dans lequel le presseur (40) comprend, à l'entrée du passage (54), un dispositif de guidage entrant (70) pour ajuster le positionnement du cordon fromager (19) dans le passage (54) selon une direction perpendiculaire au plan défini par les directions longitudinale (X) et transversale (Y).

10. Procédé de production (100) selon l'une quelconque des revendications précédentes, dans lequel le cordon fromager (19) est reçu sur un support (82) à sa sortie du presseur (40), en particulier le presseur (40) comprend, à sa sortie, un organe de guidage sortant (76) pour plaquer le cordon fromager (19) contre ledit support (82).

11. Procédé de production (100) selon la revendication 10, dans lequel l'étape d'enroulement (170) comprend une sous-étape supplémentaire (176) de rétractation de l'organe de saisie (86) à l'intérieur du support (82), et de préférence l'étape d'enroulement (170) comprend une sous-étape supplémentaire (174) de détection de la sortie d'une extrémité terminale (97B) du cordon fromager (19) hors du presseur (40), la rétractation de l'organe de saisie (86) à l'intérieur du support (82) étant enclenchée au terme d'une durée prédéterminée après ladite détection (174).

12. Procédé de production (100) selon l'une quelconque des revendications 1 à 11, dans lequel le cordon fromager (19) est maintenu tendu entre la sortie du presseur (40) et l'organe de saisie (86) pendant le déplacement de l'organe de saisie (86).

13. Procédé de production (100) selon l'une quelconque des revendications précédentes, dans lequel le cordon fromager (19) comprend des fibres, une majorité desdites fibres étant orientées selon une direction d'élongation du cordon fromager (19).

14. Dispositif d'enroulement (20) pour l'enroulement d'un cordon fromager (19) en spirale, le dispositif d'enroulement (20) comprenant :
- un bâti,
- un presseur (40) apte à entraîner le cordon fromager (19) relativement au bâti selon une direction longitudinale (X) tout en comprimant le cordon fromager (19) selon une direction transversale (Y) sensiblement perpendiculaire à la direction longitudinale (X), le presseur (40) présentant une sortie, et
- un organe (86) de saisie du cordon fromager (19) en sortie du presseur (40), ledit organe de saisie (86) étant monté rotatif relativement au bâti autour d'un axe de rotation (84) sensiblement perpendiculaire aux directions transversale (Y) et longitudinale (X).

## Patentansprüche

1. Verfahren (100) zur Herstellung einer Käsespirale, **dadurch gekennzeichnet, dass** es die folgenden Schritte umfasst:
- Beschaffen (110) einer Käsepaste,
- Extrudieren (120) der Käsepaste, um einen Käsestrang (19) zu bilden, und
- Wickeln (170) des Käsestrangs (19) um sich selbst, um die Käsespirale zu bilden,
wobei das Verfahren einen weiteren Schritt (160) des Hindurchführens des Käsestrangs (19) durch eine Pressvorrichtung (40) umfasst, bei dem der Käsestrang (19), der in einer Längsrichtung (X) ausgestreckt wird, in dieser Längsrichtung (X) angetrieben und in einer zur Längsrichtung (X) im Wesentlichen senkrechten Querrichtung (Y) gequetscht wird, wobei das Wickeln (170) die folgenden Teilschritte umfasst:
- Ergreifen (172) eines Anfangsendes (97A) des Käsestrangs (19) durch ein Greifelement (86) am Auslass der Pressvorrichtung (40), dann
- Drehen (173) des Greifelements (86) um eine Drehachse (84), die im Wesentlichen senkrecht zu der Längs- (X) und Querrichtung (Y) verläuft.

2. Herstellungsverfahren (100) nach Anspruch 1, bei dem der Schritt (173) des Drehens das gleichzeitige Bewegen des Greifelements (86) zusammen mit der Drehachse (84) von der Pressvorrichtung (40) weg umfasst.

3. Herstellungsverfahren (100) nach Anspruch 1, bei dem die Bewegung des Greifelements (86) zusammen mit der Drehachse (84) entlang einer Bewegungsrichtung durchgeführt wird, die in einer durch die Quer-(Y) und Längsrichtung (X) definierten Ebene liegt, wobei die Bewegungsrichtung insbesondere durch die Längsrichtung (X) gebildet wird, wobei die Bewegung des Greifelements (86) und der Drehachse (84) vorzugsweise aus einer Längsbewegung besteht.

4. Herstellungsverfahren (100) nach einem beliebigen der Ansprüche 1 bis 3, bei dem das Greifelement (86) auf die Drehachse (84) zentriert ist, wobei die Drehachse (84) insbesondere im Wesentlichen vertikal verläuft.

5. Herstellungsverfahren (100) nach einem beliebigen der Ansprüche 1 bis 4, bei dem der Wickelschritt (170) das Detektieren (171) des Austritts des Anfangsendes (97A) des Stranges (19) aus der Pressvorrichtung (40) umfasst, wobei die Drehung (173) des Greifelements (86) am Ende einer vorbestimmten Dauer nach dem Detektieren (171) ausgelöst wird, wobei der Käsestrang (19) während des Wickelns (170) vorzugsweise eine Temperatur von mehr als 35°C aufweist.

6. Herstellungsverfahren (100) nach einem beliebigen der Ansprüche 1 bis 5, bei dem der Käsestrang (19) während seines Durchlaufs durch die Pressvorrichtung (40) einen durch die Pressvorrichtung (40) definierten Längsdurchgang (54) durchläuft, wobei der Durchgang (54) eine Einschnürung (66) mit einer Querbreite zwischen 3 und 5 mm aufweist.

7. Herstellungsverfahren (100) nach Anspruch 6, bei dem das Greifelement (86) durch zwei Klauen (89) gebildet wird, die vor Beginn der Drehung des Greifelements (86) im Wesentlichen quer zueinander ausgerichtet und in Querrichtung um eine Breite zwischen 100% und 300% der Querbreite der Einschnürung (66) voneinander beabstandet sind.

8. Herstellungsverfahren (100) nach Anspruch 6 oder 7, bei dem die Pressvorrichtung (40) einen ersten und zweiten geschlossene Riemen (50, 52) umfasst, die zwischen sich den Durchgang (54) des Käsestrangs (19) definieren, wobei jeder der geschlossenen Riemen (50, 52) zwischen zwei Riemenscheiben (60, 62) gespannt ist, die im Wesentlichen parallel zur Drehachse (84) und in Längsrichtung voneinander beabstandet sind, wobei jeder der geschlossenen Riemen (50, 52) einen Führungsabschnitt (64) aufweist, der zwischen den Riemenscheiben (60, 62) angeordnet ist und sich im Wesentlichen in Längsrichtung erstreckt, wobei der Führungsabschnitt (64) jedes geschlossenen Riemens (50, 52) dem Führungsabschnitt (64) des anderen geschlossenen Riemens (50, 52) gegenüberliegt, wobei die Einschnürung (66) des Durchgangs (54) durch den Teil des Durchgangs (54) gebildet wird, der sich zwischen den Führungsabschnitten (64) erstreckt.

9. Herstellungsverfahren (100) nach einem beliebigen der Ansprüche 6 bis 8, bei der die Pressvorrichtung (40) am Eingang des Durchgangs (54) eine Eingangsführungsvorrichtung (70) zum Einstellen der Positionierung des Käsestrangs (19) im Durchgang (54) in einer Richtung senkrecht zu der durch die Längs- (X) und Querrichtung (Y) definierten Ebene umfasst.

10. Herstellungsverfahren (100) nach einem beliebigen der vorhergehenden Ansprüche, bei dem der Käsestrang (19) an seinem Austritt aus der Pressvorrichtung (40) auf einem Träger (82) aufgenommen wird, insbesondere die Pressvorrichtung (40) an ihrem Auslass ein Eingangsführungsvorrichtung (76) umfasst, um den Käsestrang (19) gegen den Träger (82) zu drücken.

11. Herstellungsverfahren (100) nach Anspruch 10, bei dem der Wickelschritt (170) einen zusätzlichen Teilschritt (176) des Zurückziehens des Greifelements (86) in den Träger (82) umfasst, und vorzugsweise der Wickelschritt (170) einen zusätzlichen Teilschritt (174) des Detektierens des Austritts eines Endes (97B) des Käsestrangs (19) aus der Pressvorrichtung (40) umfasst, wobei das Zurückziehen des Greifelements (86) in den Träger (82) am Ende einer vorbestimmten Dauer nach dem Detektieren (174) ausgelöst wird.

12. Herstellungsverfahren (100) nach einem beliebigen der Ansprüche 1 bis 11, bei dem der Käsestrang (19) während der Bewegung des Greifelements (86) zwischen dem Austritt aus der Pressvorrichtung (40) und dem Greifelement (86) gespannt gehalten wird.

13. Herstellungsverfahren (100) nach einem beliebigen der vorhergehenden Ansprüche, bei dem der Käsestrang (19) Fasern umfasst, wobei eine Mehrheit der Fasern entlang einer Richtung der Streckung des Käsestrangs (19) ausgerichtet ist.

14. Wickelvorrichtung (20) zum Wickeln eines Käsestrangs (19) zu einer Spirale, wobei die Wickelvorrichtung (20) umfasst:
- ein Gestell,
- eine Pressvorrichtung (40), die geeignet ist, den Käsestrang (19) relativ zu dem Gestell gemäß einer Längsrichtung (X) anzutreiben, während sie den Käsestrang (19) in einer Querrichtung (Y) im Wesentlichen senkrecht zu der Längsrichtung (X) zusammendrückt, wobei die Pressvorrichtung (40) einen Auslass aufweist, und
- ein Element (86) zum Greifen des Käsestrangs (19) am Auslass der Pressvorrichtung (40), wobei das Greifelement (86) relativ zum Gestell um eine Drehachse (84) drehbar angebracht ist, die im Wesentlichen senkrecht zur Quer- (Y) und Längsrichtung (X) verläuft.

## Claims

1. Method (100) for producing a cheese spiral, **characterized in that** it comprises the following steps:
- providing (110) a cheese paste,
- extruding (120) the cheese paste, so as to form a cheese string (19), and
- winding (170) the cheese string (19) upon itself, so as to form the cheese spiral, the method comprising an additional step (160) of passage through a presser (40) by the cheese string (19), during which the cheese string (19), which is elongated in a longitudinal direction (X), is driven in this longitudinal direction (X) and crushed in a transverse direction (Y) substantially perpendicular to the longitudinal direction (X), the winding (170) comprising the following substeps :
- gripping (172) of an initial end (97A) of the cheese string (19) by a gripping member (86) output of the presser (40), then
- rotation (173) of the gripping member (86) about an axis of rotation (84) substantially perpendicular to the longitudinal direction (X) and transverse direction (Y).

2. Method (100) for producing a cheese spiral according to claim 1, wherein the rotating step (173) comprises simultaneously moving the gripping member (86), together with the axis of rotation (84), to a distance from the presser (40).

3. Method (100) for producing a cheese spiral according to claim 1, wherein the displacement of the gripping member (86) together with the axis of rotation (84) is performed in a direction of movement in a plane defined by the transverse direction (Y) and longitudinal direction (X), the displacement direction being, in particular, constituted by the longitudinal direction (X), the displacement of the gripping member (86) and the axis of rotation (84) preferably consisting of a longitudinal translation.

4. Method (100) for producing a cheese spiral according to any one of claims 1 to 3, wherein the gripping member (86) is centered on the axis of rotation (84), the axis of rotation (84) being in particular substantially vertical.

5. Method (100) for producing a cheese spiral according to any one of claims 1 to 4, wherein the winding step (170) comprises detecting (171) the output of the initial end (97A) of the string (19) coming out of the presser (40), the rotation (173) of the gripping member (86) being engaged after a predetermined period after the detection (171), the cheese string (19) being preferably at a temperature above 35°C during the winding (170).

6. Method (100) for producing a cheese spiral according to any one of claims 1 to 5, wherein, during its passage through the presser (40), the cheese string (19) follows a longitudinal passage (54) defined by the presser (40), the passage (54) having a constriction (66) having a transverse width of between 3 and 5 mm.

7. Method (100) for producing a cheese spiral according to claim 6, wherein the gripping member (86) is in the form of two claws (89) which, before the start of the rotation of the gripping member (86), are substantially transversely aligned with each other and are transversely spaced from each other by a width of between 100% and 300% of the transverse width of the constriction (66).

8. Method (100) for producing a cheese spiral according to claim 6 or 7, wherein the presser (40) comprises a first and a second closed belt (50, 52) defining between them the passage (54) of the cheese string (19), each of the closed belts (50, 52) being tensioned between two pulleys (60, 62) substantially parallel to the axis of rotation (84) and spaced longitudinally from each other, each of the closed belts (50, 52) comprising a guidance section (64) arranged between the pulleys (60, 62), extending substantially longitudinally, the guidance section (64) of each closed belt (50, 52) facing the guidance section (64) of the other closed belt (50, 52), the constriction (66) of the passage (54) being constituted by the portion of the passage (54) extending between the guidance sections (64).

9. Method (100) for producing a cheese spiral according to any one of claims 6 to 8, wherein the presser (40) comprises, at the inlet of the passage (54), an incoming guidance device (70) for adjusting the positioning the cheese string (19) in the passage (54) in a direction perpendicular to the plane defined by the longitudinal direction (X) and transverse direction (Y).

10. Method (100) for producing a cheese spiral according to any one of the preceding claims, wherein the cheese string (19) is received on a support (82) at its output of the presser (40), in particular the presser (40) comprises, at its output, an outgoing guidance member (76) for pressing the cheese string (19) against the support (82)..

11. Method (100) for producing a cheese spiral according to claim 10, wherein the winding step (170) comprises an additional substep (176) of retracting the gripping member (86) to the inside of the support (82), and preferably the winding step (170) comprises an additional substep (174) for detecting the output of a terminal end (97B) of the cheese string. (19) from the presser (40), the retraction of the gripping member (86) within the support (82) being engaged after a predetermined period after the detection (174).

12. Method (100) for producing a cheese spiral according to any one of claims 1 to 11, wherein the cheese string (19) is held taut between the outlet of the presser (40) and the gripping member (86) during the movement of the gripping member (86).

13. Method (100) for producing a cheese spiral according to any one of the preceding claims, wherein the cheese string (19) comprises fibers, a majority of the fibers being oriented in a direction of elongation of the cheese string (19).

14. Winding device (20) for winding a spiral cheese string (19), the winding device (20) comprising:
- a frame,
- a presser (40) designed to drive the cheese string (19) in a longitudinal direction (X) relative to the frame while compressing the cheese string (19) in a transverse direction (Y) substantially perpendicular to the longitudinal direction (X), the presser (40) having an outlet and
- a member (86) for gripping the cheese string (19) at the outlet of the presser (40), the gripping member (86) being mounted to rotate relative to the frame about an axis of rotation (84) that is substantially perpendicular to the transverse (Y) and longitudinal (X) directions.
